# EUROPEAN PATENT APPLICATION

(11) **EP 4 455 320 A1**
(43) Date of publication of application: **30.10.2024**
(21) Application number: 22918835.4
(22) Date of filing: 21.12.2022
(51) Int. Cl.: C21D 8/12, C22C 38/00, C22C 38/04, C22C 38/60, H01F 1/147

(54) **ORIENTED ELECTROMAGNETIC STEEL SHEET**

(30) Priority: 06.01.2022 JP 2022001316
(71) Applicant: JFE Steel Corporation, Tokyo 100-0011 (JP)
(72) Inventor: YAMAGUCHI, Hiroi, Tokyo 100-0011 (JP); IMAMURA, Takeshi, Tokyo 100-0011 (JP); ICHIHARA, Yoshihisa, Tokyo 100-0011 (JP); OMURA, Takeshi, Tokyo 100-0011 (JP)
(74) Representative: Haseltine Lake Kempner LLP
(86) International application number: PCT/JP2022/047218
(87) International publication number: WO 2023/132251

(57) **Abstract**

The present disclosure proposes a grain-oriented electrical steel sheet that reduces iron loss by controlling the magnetic domain structure and can maintain the iron loss reduction effect even after subjection to stress relief annealing. The grain-oriented electrical steel sheet comprising a predetermined chemical composition and a local area having a misorientation angle of 1.5 degrees or more from surrounding crystals and extending linearly in a direction crossing a rolling direction on at least one of front and back surfaces of the steel sheet, wherein the local area has a volume fraction of 0.1 % or more and 2.0 % or less and a residual stress of 100 MPa or less, and the surface having the local area has an average amount of roughness on a steel substrate being less than 5 µm.

## Description

### TECHNICAL FIELD

The present disclosure relates to a grain-oriented electrical steel sheet with low iron loss and small magnetostrictive vibration that is suitable as a material for iron cores of transformers and the like.

### BACKGROUND

A grain-oriented electrical steel sheet is a soft magnetic material and is mainly used as a material for iron cores of transformers, rotating machines, and the like. Therefore, a grain-oriented electrical steel sheet is required to have high magnetic flux density and low iron loss and magnetostriction as its magnetic properties. To meet this requirement, it is important to highly accord secondary recrystallized grains in the steel sheet with {110}<001> orientation (Goss orientation), and reduce impurities in a product steel sheet.

Because there are limits on the above-described crystal grain orientation control and impurity reduction, a technique of introducing nonuniformity into the steel sheet surface by physical means to subdivide the magnetic domain width to reduce iron loss, that is, a magnetic domain refining technique has been developed.

For example, JP S57-2252 B (PTL 1) proposes a technique of irradiating a steel sheet as a finished product with a laser to introduce linear areas of high-dislocation density into a surface layer of the steel sheet, thereby narrowing the magnetic domain width and reducing the iron loss. This technique is widely used because of its excellent manufacturability.

When a grain-oriented electrical steel sheet is excited by subjecting to alternating current magnetization, the amount of magnetization changes like a sine wave, so that the expansion and contraction movement of the steel sheet itself based on the reciprocating motions of domain walls that separate magnetic domains, so-called change in the amount of magnetostriction over time, produces a waveform that is relatively close to a sine wave.

Other promising magnetic domain refining techniques include a method of mechanically forming grooves using a tooth-shaped roller or the like (JP H03-69968 B (PTL 2)), and a method of electrically or chemically forming grooves by etching or the like (JP S61-117218 A (PTL 3)). With these groove formation methods, the magnetic domain refining effect is not lost and the iron loss is kept low even after heat treatment such as stress relief annealing. As a result, it is possible to use the steel sheet as an iron core material for almost all transformers, including wound core type transformers.

In contrast to these groove formation methods, JP H09-49024 A (PTL 4) proposes a technique of forming grooves on a final cold-rolled sheet using laser beam or plasma flame to maintain the magnetic domain refining effect even after strain relief annealing. This technique is relatively simple and allows for low-cost processing.

### CITATION LIST

### Patent Literature

PTL 1: JP S57-2252 B
PTL 2: JP H03-69968 B
PTL 3: JP S61-117218 A
PTL 4: JP H09-49024 A

### SUMMARY

### (Technical Problem)

However, the technique described in PTL 1 has an essential problem that the magnetic domain refining effect disappears due to strain relief annealing. Therefore, in order to maintain the iron loss reduction effect, its application is limited to stacked core type transformers where normally strain relief annealing is not performed.

On the other hand, in the case of applying a magnetic domain control method that utilizes residual stress by laser irradiation or the like, the motions of domain walls are strongly affected by the stress. As a result, the change in the amount of magnetostriction over time becomes a complex waveform with superimposed high-order harmonics that is different from a sine wave, and it is known that when such as a steel sheet is used for iron cores of transformers and the like, noise increases.

The technique described in PTL 2 involves maintenance of tooth-shaped rollers that wear out, and the technique described in PTL 3 involves application and removal of resist ink used for etching. Both techniques have many problems in manufacturing and increased costs.

When magnetic domain control is performed using these methods, the residual strain is basically very small, so the magnetostrictive vibration has a waveform close to a sine wave similar to that of a steel sheet without magnetic domain control, which is advantageous for reducing transformer noise.

With the technique described in PTL 4, convex portions such as spatters and burrs are formed around grooves simultaneously with the irradiation of laser beam or plasma flame. Therefore, there are problems such as a decrease in space factor, and the deterioration of insulation properties of insulating coating applied afterwards that results in dielectric breakdown of transformers, and this technique has not been put into practical use.

In any case, the method of refining magnetic domains by forming grooves tend to result in non-uniform groove shapes and thus variations in the obtained iron loss values. Further, because the cross-sectional area of the steel sheet is substantially reduced at the groove-formed area, the magnetic flux density Bs is reduced by about 1 % at maximum after the groove formation compared to that before the groove formation.

It could thus be helpful to provide a grain-oriented electrical steel sheet that reduces iron loss by controlling magnetic domain structure, where the iron loss reduction effect can be maintained even after subjection to strain relief annealing, and noise can be suppressed when the steel sheet is used for iron cores of transformers.

### (Solution to Problem)

We have newly discovered that when the surface of a steel sheet after secondary recrystallization in the Goss orientation is irradiated with a laser beam in a linear pattern in a direction that intersects the rolling direction of the steel sheet (for example, orthogonal to the rolling direction) and the irradiated area is locally melted, a resolidification microstructure can be formed that is different from the original Goss orientation microstructure, and that this resolidification microstructure can produce a magnetic domain refining effect.

Further investigation revealed that although so-called grooves may be formed depending on the laser irradiation conditions, the groove formation is not necessarily effective when the resolidification microstructure is used for magnetic domain refining. On the other hand, the grooves (recessed portions) reduce the magnetic flux density due to a decrease in the steel sheet cross-sectional area, and this negative effect outweighs the benefits.

When grooves are formed, there are problems of deterioration of stacking factor and insulation resistance due to the so-called burrs, which are raised portions caused by removing the steel substrate in the groove portion to the surroundings. Accordingly, it is understood that conditions that do not cause even very shallow grooves, that is, a certain degree of roughness, on the steel sheet surface are more advantageous in terms of improving magnetic flux density.

The resolidification microstructure in the present disclosure refers to a solidification microstructure that is formed by once melting and then resolidifying the microstructure and has an orientation different from the original crystal orientation. This is different from a microstructure obtained by the conventional non-heat resistant strain-introduced magnetic domain refining technique described in PTL 1, where laser irradiation leaves a linear strain distribution caused by rapid heating and cooling and the original crystal orientation is maintained without melting the microstructure.

Further, we have diligently studied laser beam irradiation conditions in a case of using laser beam under which the incident energy can be efficiently absorbed into the steel substrate to melt the steel substrate while suppressing spatters. As a result, we discovered that by irradiating the steel sheet with a ring-mode fiber laser beam that combines two or more laser beams with different energy intensities, it is possible to form a melt zone with almost no roughness on the steel sheet surface, that is, without reducing the magnetic flux density.

In addition, it is also effective to irradiate the steel sheet with a single laser beam called flat-top laser beam that has a uniform intensity distribution on the irradiated surface and a relatively large beam radius without focusing the beam.

We also discovered that the use of a green laser whose wavelength is half a fundamental wavelength, that is, 0.53 µm, called a second harmonic, or UV lasers whose wavelengths are 0.36 µm and 0.27 µm that are a third harmonic and a fourth harmonic, respectively, is more advantageous in maintaining the surface flatness of the steel sheet because the absorption efficiency is better due to their shorter wavelengths, and spatter is less likely to occur.

Similar effects can also be obtained using electron beam irradiation. The wavelength of the electron beam is extremely short compared to that of laser beam, and the absorption efficiency into the steel sheet is even higher. We confirmed that it is unnecessary to combine two or more beams in order to obtain this effect, and that there are irradiation conditions that can form a melt zone with the above effect without causing large roughness on the steel sheet surface by adjusting the accelerating voltage, beam current, and radial energy distribution called beam profile by appropriately combining focusing coils that serve as electromagnetic lenses.

Further, we confirmed that after laser beam irradiation or electron beam irradiation, some of the residual strain introduced by irradiation is eliminated by baking insulating coatings on both sides of the steel sheet at about 800 °C. Specifically, a comparison of the magnetostrictive vibration waveforms before and after the baking of insulating coating indicates that the magnetostriction waveform after baking had reduced high-harmonic component and was closer to the waveform before irradiation, which is advantageous for reducing noise in transformers.

The following provides a specific description of the circumstances that led to the present disclosure.

Samples of grain-oriented electrical steel sheets that had a magnetic flux density Bs of 1.935 T on average and mainly composed of 3.4 % Si and 0.08 % Mn were prepared by cold rolling steel sheets to a final thickness of 0.23 mm, performing decarburization annealing to decarburize them to 10 mass ppm or less, and then applying an annealing separator mainly composed of MgO and performing final annealing that also served as secondary recrystallization and purification.

Next, as laser irradiation conditions, the laser scanning rate was fixed at 10 m/s, the oscillation power was varied from 100 W to 300 W, and the focus and energy profile were adjusted to prepare three groups of materials of different irradiation levels: Group 1 is of a level at which thermal residual strain occurs to the extent that the steel substrate does not melt; Group 3 is of a level at which linear grooves are formed in the steel substrate; and Group 2 is of a level between the above groups at which melting traces are visible due to incident energy but no grooves are formed.

Half of the samples in each group were irradiated with a ring-mode fiber laser in a linear pattern at 5 mm intervals at various power levels in a direction orthogonal to the rolling direction on one side of the steel sheet, and then an insulating coating mainly composed of magnesium phosphate and colloidal silica was applied on the steel sheet with a thickness of 2 µm per side and baking was performed at 850 °C for one minute. On the other hand, the other half of the samples were first applied with insulating coating and baked, and then subjected to laser irradiation under the same conditions as the former half.

Group 1 corresponds to the well-known non-heat resistant strain-introduced magnetic domain refining treatment as described in PTL 1 and other literatures. Group 3 corresponds to the magnetic domain refining treatment that forms linear grooves of about 1/10 of the sheet thickness as described in PTL 4 and other literatures.

The magnetic flux density Bs and iron loss W_{17/50} of the steel sheets thus obtained were measured using a 500 mm square SST (single sheet magnetic property measurement instrument), and the results are summarized in Table 1.

### [Table 1]

**Table 1**

| Group | Treatment | Magnetic properties | |
|---|---|---|---|
| | | W_{17/50} (W/kg) | B₈ (T) |
| 1 | Coating after laser irradiation | 0.82 to 0.84 | 1.933 to 1.937 |
| | Laser irradiation after coating | 0.71 to 0.73 | 1.932 to 1.937 |
| 2 | Coating after laser irradiation | 0.72 to 0.80 | 1.921 to 1.932 |
| | Laser irradiation after coating | 0.70 to 0.77 | 1.920 to 1.934 |
| 3 | Coating after laser irradiation | 0.73 to 0.76 | 1.905 to 1.915 |
| | Laser irradiation after coating | 0.70 to 0.75 | 1.904 to 1.915 |

As indicated in Table 1, for Group 1, the magnetic flux density Bs hardly changes before and after the magnetic domain refining treatment. Further, the best iron loss values were obtained on average when laser irradiation was performed after applying insulating coating. Conversely, if the insulating coating is baked after laser irradiation, the introduced thermal residual strain disappears due to the baking treatment at 850 °C, the magnetic domain refining effect is lost, and the iron loss properties cannot be improved.

On the other hand, for Group 3, the magnetic flux density B₈ significantly decreases after the magnetic domain refining treatment. This is due to the formation of linear grooves orthogonal to the rolling direction, which reduces the effective cross-sectional area of magnetic flux flowing inside the steel sheet. This reduction in magnetic flux density is an unavoidable phenomenon in the so-called heat-resistant magnetic domain refining technique. On the other hand, if the groove depth is reduced to suppress the reduction of magnetic flux density, the iron loss reduction effect is reduced. Unlike Group 1, it is basically unaffected by heat treatment.

For Group 3, the iron loss is further reduced when laser irradiation is performed after applying insulating coating, presumably due to the superposition of the effect of thermal residual strain by laser irradiation and the effect of groove formation. On the other hand, if laser irradiation is performed first and then the insulating coating is baked, the effect of residual strain is lost, and a slight increase in iron loss value can be observed.

Group 2 has large variations in magnetic flux density B s. Generally, it has values between that of Group 1 and Group 3, but there are some conditions where the magnetic flux density Bs hardly decreases. The iron loss values are basically intermediate between that of Group 1 and Group 3, but the best iron loss values were obtained only under some conditions.

From the above test results, it is understood that there are irradiation conditions that can achieve ideal magnetic properties such that the decrease in magnetic flux density Bs is small and the iron loss reduction effect is large. A product obtained under these irradiation conditions corresponds to the grain-oriented electrical steel sheet of the present disclosure that has low iron loss and excellent noise properties.

We clarified the characteristics of the material corresponding to the present disclosure based on the measurement results of crystal orientation distribution near the laser irradiated area and the flatness of the steel substrate surface.

First, the crystal orientation distribution near the laser irradiated area is explained.

To investigate the cause of the iron loss reduction effect that appeared in the above test despite the absence of groove-like depressions, the local orientation distribution of secondary recrystallized grains near the irradiated area was measured using electron backscatter diffraction (EBSD).

As a result, we discovered that, although the crystalline structure of Group 2 could be regarded as a single crystal with a so-called Goss-oriented grain size of about 10 mm where the crystal grains provided excellent magnetic properties in the rolling direction, minute rotation that resulted in a crystal misorientation angle of 0.5 degrees to 3.0 degrees was observed in an area of about 50 µm in width and 20 µm in depth that was estimated to be the affected area of laser irradiation.

In other words, it is presumed that the crystalline structure of Group 2 was obtained by locally melting the steel substrate due to the incident energy and solidifying it again. It is considered that the once melted area solidified under the influence of the surrounding crystal orientation, resulting in a crystal orientation that is relatively close to the surrounding crystal orientation.

Here, at the incident energy level of Group 1, some crystal lattices were distorted by thermal strain, but no crystal rotation occurred. In other words, when the crystal orientation rotation (crystal misorientation angle) was less than 1.5 degrees, no significant magnetic domain refining effect was obtained. On the other hand, although the upper limit of the rotation angle (crystal misorientation angle) had not been determined, the amount of roughness of the steel substrate surface increased and the crystalline structure was locally sputtered and evaporated when the incident energy was increased to enlarge the melted area. As a result, the rotation angle could not be evaluated.

Next, the flatness of the steel substrate surface is explained.

In the above test, when the average amount of roughness was less than 5 µm, the magnetic flux density Bs hardly decreased. On the other hand, when the average amount of roughness was 5 µm or more, not only did the magnetic flux density Bs decrease due to depressions, but also bank-like raised portions were formed around the depressions. As a result, the insulating coating was partially thinned to deteriorate insulation properties, and the stacking factor was decreased in a transformer iron core obtained by stacking the steel sheets.

The amount of roughness of the steel substrate surface in the above test was evaluated by performing measurement from the surface using a three-dimensional laser displacement meter to measure the difference between the highest and lowest points in cross sections near irradiated areas, and then determining the average of the results.

From the above discussion, it is discovered that the two factors mentioned above are the main reasons why the magnetic flux density B₈ of the sample does not decrease: the slight crystal rotation (crystal orientation difference) produces a magnetic domain refining effect, and the amount of surface roughness is small.

Further, because the crystal orientation itself is rotating, the crystal orientation does not change unless the crystal is heated again to a temperature at which it melts. Therefore, it is considered that the magnetic domain refining effect is maintained without disappearing even after strain relief annealing at 800 °C for three hours that is required for iron cores of wound core type transformers, for example.

Next, for the materials of Group 2 that were subjected to laser irradiation after applying insulating coating, an insulating coating mainly composed of magnesium phosphate without colloidal silica was baked at a thickness of 0.5 µm only on the irradiated surface at various temperatures ranging from 300 °C to 800 °C for the purpose of ensuring the insulation properties of the irradiated area, and the effects of residual stress due to laser irradiation and the effects on noise properties when used for a transformer core were evaluated.

In the present disclosure, the residual stress is obtained using the Wilkinson method that calculates the lattice strain amount from strain of a diffraction pattern obtained from the crystal lattice of the steel substrate using EBSD, where the three-dimensional stress distribution in the rolling direction (RD), the transverse direction (direction orthogonal to the rolling direction) (TD), and the normal direction (direction orthogonal to the sheet surface) (ND) is measured, and the maximum value is taken as the residual stress.

Further, the samples were obliquely sheared to an iron core size of 100 mm in the width, 300 mm in the top base, and 500 mm in the bottom base, the sheared samples were constructed into a 500 mm square single-phase model transformer with four sides composed of each of their bottom bases to investigate the relationship between residual stress and transformer properties. In this case, the stacking thickness of the model transformer was about 30 mm, and the mass of the electrical steel sheet used was about 50 kg. Noise measurement was performed by applying a load of 1.0 kgf/cm² in surface pressure to the entire surface of the iron core and placing a condenser microphone at a height of 150 mm directly above the center of the legs, and the average of four points was taken as the result. The noise measurement was performed under no-load excitation conditions of 1.7 T and 50 Hz, A-scale frequency weighting was performed as frequency weighting for auditory sensation, and overall values were used to compare noise.

The residual stresses and the magnetic properties and noise properties of the single-phase transformers are summarized in Table 2.

### [Table 2]

**Table 2**

| Baking temperature (°C) | Maximum residual stress (MPa) | Single-phase transformer properties | |
|---|---|---|---|
| | | W_{17/50} (W/kg) | Noise (dBA) |
| 300 | 400 to 800 | 0.72 to 0.90 | 38.0 to 42.0 |
| 450 | 250 to 550 | 0.72 to 0.86 | 36.5 to 40.0 |
| 600 | 110 to 300 | 0.72 to 0.84 | 37.5 to 39.0 |
| 700 | 60 to100 | 0.73 to 0.80 | 34.5 to 36.5 |
| 800 | 30 to 80 | 0.73 to 0.80 | 34.0 to 35.5 |

As indicated in Table 2, when the baking temperature decreased, the variations in transformer iron loss value increased, and the noise also increased, but when the baking temperature was 700 °C or higher, the variations in iron loss value decreased, and the noise also decreased. The maximum residual stress near the irradiated area had a similar tendency. This is thought to be due to the fact that the thermal strain introduced by laser irradiation is eliminated by the baking treatment and the residual stress is relieved. It is presumed that the change in noise value is also for the same reason.

Generally, transformer noise increases as high-harmonic components of magnetostrictive vibrations caused by alternating current excitation increase. However, it is thought that as the baking temperature increases, residual stress is relieved, harmonic components are decreased, and the noise is reduced.

Further, a low iron loss value is obtained in terms of transformer iron loss, although it is the best value in the variations, under baking conditions of low temperatures of 600 °C or lower. This is presumably due to the superposition of the magnetic domain refining effect of thermal strain caused by residual stress and the effect of crystal orientation rotation.

Based on the above experiment results, we completed the present disclosure. Primary features of the present disclosure are as follows.
1. A grain-oriented electrical steel sheet, comprising
   a chemical composition containing (consisting of), in mass%, Si: 2.0 % to 8.0 %, Mn: 0.005 % to 1.000 %, and C: 0.0050 % or less, with the balance being Fe and inevitable impurities, and
   a local area having a misorientation angle of 1.5 degrees or more from surrounding crystals and extending linearly in a direction crossing a rolling direction on at least one of front and back surfaces of the steel sheet, wherein
      the local area has a volume fraction of 0.1 % or more and 2.0 % or less and a residual stress of 100 MPa or less, and
      the surface having the local area has an average amount of roughness on a steel substrate being less than 5 µm.
2. The grain-oriented electrical steel sheet according to aspect 1., wherein the chemical composition further contains, in mass%, at least one selected from the group consisting of Ni: 0.01 % to 1.50 %, Cr: 0.01 % to 0.50 %, Cu: 0.01 % to 0.50 %, Bi: 0.01 % to 0.50 %, Sb: 0.01 % to 0.20 %, Sn: 0.01 % to 0.20 %, Mo: 0.01 % to 0.20 %, P: 0.01 % to 0.20 %, and Nb: 0.001 % to 0.015 %.

### (Advantageous Effect)

According to the present disclosure, it is possible to provide a grain-oriented electrical steel sheet where iron loss is further reduced compared to conventional techniques even after strain relief annealing, and both low iron loss and low noise are achieved when it is used for transformer cores, by forming a local area with a predetermined misorientation angle, controlling the volume fraction and residual stress of the local area, and further controlling the average amount of roughness on steel substrate of the surface having the local area.

### DETAILED DESCRIPTION

The following explains reasons for limitations placed on the features of the present disclosure. First, the chemical composition of the material of the grain-oriented electrical steel sheet (hereinafter may be simply referred to as steel sheet or product sheet) of the present disclosure is described.

Si is an element that effectively improves electrical resistance of steel and improves iron loss properties. When the content is 2.0 mass% or more, the iron loss reduction effect is particularly good. On the other hand, when the content is 8.0 mass% or less, particularly excellent workability and magnetic flux density can be obtained. Therefore, the Si content is set in a range of 2.0 mass% to 8.0 mass%.

Mn is an element advantageous for improving hot workability. However, when the content is less than 0.005 mass%, the addition effect is poor. On the other hand, when the content is 1.000 mass% or less, the magnetic flux density of the product sheet is particularly good. Therefore, the Mn content is set in a range of 0.005 mass% to 1.000 mass%.

When the C content exceeds 0.0050 mass%, iron loss increases due to magnetic aging. Therefore, the C content is limited to 0.0050 mass% or less. Desirably, it is 0.0030 mass% or less.

The basic components of the present disclosure have been described above, and the following elements can be appropriately contained as optional components in the present disclosure.

To improve the magnetic flux density, it is possible to contain, in mass%, at least one selected from the group consisting of Ni: 0.01 % to 1.50 %, Cr: 0.01 % to 0.50 %, Cu: 0.01 % to 0.50 %, Bi: 0.01 % to 0.50 %, Sb: 0.01 % to 0.20 %, Sn: 0.01 % to 0.20 %, Mo: 0.01 % to 0.20 %, P: 0.01 % to 0.20 %, and Nb: 0.001 % to 0.015 %. When the content of each added element is below the corresponding lower limit, the magnetic property improving effect is poor. On the other hand, when the content of each added element exceeds the corresponding upper limit, development of secondary recrystallized grains is suppressed, causing deterioration of magnetic properties.

The balance other than the above components is Fe and inevitable impurities that may generally be mixed in the manufacturing process.

Next, reasons for limiting the properties of the steel sheet of the present disclosure will be described.

### Local area (melted and resolidified area) extending linearly in a direction crossing the rolling direction of the steel sheet and having a misorientation angle of 1.5 degrees or more from the surrounding crystals

The grain-oriented electrical steel sheet of the present disclosure has a heat-resistant iron loss reduction effect despite the absence of groove-like depressions. To achieve this, it is necessary to have a local area having a crystal misorientation angle (rotation angle) of 1.5 degrees or more from the surrounding crystals on at least one of the front and back surfaces of the steel sheet. If the crystal misorientation angle of crystal orientation is less than 1.5 degrees, the effect of dividing magnetic domains by the local area to form magnetic poles is small, and good magnetic domain refining effect cannot be obtained. On the other hand, the upper limit of the crystal misorientation angle is not particularly limited. If the incident energy is increased and the melted area is too large, the amount of roughness of the steel sheet surface increases, and the crystalline structure is locally sputtered and evaporated. Therefore, the upper limit of the crystal misorientation angle is about 10 degrees, which is the upper limit that can actually be measured.

In the present disclosure, the crystal misorientation angle can be obtained by measuring the crystal orientation using a two-dimensional mesh with intervals of 0.1 µm by electron backscatter diffraction (EBSD) and averaging the results.

In the present disclosure, it is preferable that there should be a plurality of the local areas extending linearly in a direction crossing the rolling direction that are spaced apart in the rolling direction.

In the present disclosure, "linearly" may be either straight or curved, and is intended to encompass solid line as well as dotted line, dashed line, and the like. The "direction crossing the rolling direction" means an angular range within ±30 degrees to the direction orthogonal to the rolling direction.

### Volume fraction of local area: 0.1 % or more and 2.0 % or less

The volume fraction of the local area is 0.1 % or more and 2.0 % or less with respect to the entire steel sheet. Further, the effect tends to be poor if the orientation difference from the surrounding crystal orientation is not discontinuous in the boundary area between the local area and its surroundings.

In the present disclosure, the volume fraction is a value of the average value obtained from five or more observation areas containing two or more of the linearly extending local areas with respect to the entire steel sheet.

When the volume fraction of the local area having a misorientation angle of 1.5 degrees or more from the surrounding areas due to crystal rotation caused by melting and resolidification is less than 0.1 %, the effect is poor. When the volume fraction is more than 2.0 %, magnetostrictive vibrations under alternating current excitation increase, and the noise reduction effect is lost when the steel sheet is used for transformer iron cores.

### Residual stress in local area: 100 MPa or less

In the present disclosure, from the viewpoint of achieving both low iron loss and low noise, the residual stress in the local area, whether tensile or compressive, should have a maximum value of 100 MPa or less within the local areas.

### Average amount of roughness of steel substrate on the surface having the local area: less than 5 µm

When the average amount of roughness of steel substrate on the surface having the local area is less than 5 µm, the magnetic flux density Bs hardly decreases, and the effects of the present disclosure can be advantageously obtained. On the other hand, when the average amount of roughness is 5 µm or more, bank-like raised portions (convex portions) are formed around the depressions. The formation of raised portions not only decreases the magnetic flux density Bs due to the depressions, but also partially thins insulating coating to deteriorate the insulation properties and decreases the stacking factor in a transformer iron core obtained by stacking the steel sheets.

The average amount of roughness is preferably less than 3 µm. On the other hand, the average amount of roughness may be 0 µm, but industrially it is about 0.3 µm or more.

The average amount of roughness of the steel substrate surface is evaluated by performing measurement from the steel substrate surface using a three-dimensional laser displacement meter in a region that includes five or more irradiated areas (local areas), measuring the difference between the highest and lowest points in cross sections near the irradiated areas at five locations, and then determining the average of the results. The "near the irradiated area" means a range of 1.0 mm around the irradiated area.

The facts that crystal rotation produces a magnetic domain refining effect and the small amount of surface roughness are considered to be the main reasons why the magnetic flux density Bs does not decrease in the present disclosure, and the effects of the present disclosure are obtained in this way.

Further, because the crystal orientation itself is rotating in the local area, the crystal orientation does not change unless the crystal is heated again to a temperature at which it melts. Therefore, the present disclosure also has the effect that the magnetic domain refining effect is maintained without disappearing even after stress relief annealing at 800 °C for three hours that is performed in the manufacturing process of iron cores of wound core type transformers.

In the present disclosure, the depth of the local area is preferably 50 µm or less from the steel sheet surface in the cross-sectional direction (thickness direction) of the steel sheet. The reason is as follows. When it is made deeper than this, the treatment causes recessed parts on the surface, which reduces the magnetic flux density and increases magnetostrictive vibrations. As a result, noise may increase when the steel sheet is used for iron cores of transformers. The depth is more preferably 30 µm or less. On the other hand, the depth is preferably 2 µm or more and more preferably 10 µm or more.

In the present disclosure, the local area preferably has a width in the rolling direction of 10 µm or more and 500 µm or less. If it is outside this range, the iron loss reduction effect is reduced. It is more preferably 20 µm or more and even more preferably 50 µm or more. On the other hand, the width in the rolling direction is more preferably 250 µm or less and even more preferably 200 µm or less.

Because the local area may not be a simple rectangle or semicircle, the longest distance in the rolling direction in each local area is taken as the width in the rolling direction in the present disclosure.

In the present disclosure, the local areas preferably have a repeating interval in the rolling direction of about 0.5 mm or more and 20 mm or less. The reason is as follows. When it is less than 0.5 mm, the frequency of local areas is too high, which has an adverse effect on magnetic properties and noise properties. On the other hand, when it is more than 20 mm, the effects of the present disclosure cannot be suitably obtained.

In the present disclosure, an insulating coating may be formed on the steel substrate surface if necessary.

Applicable examples of the insulating coating in the present disclosure include known tension coating such as glass coating mainly composed of a combination of phosphates like magnesium phosphate or aluminum phosphate and low-thermal expansion oxide like colloidal silica. The coating is formed at a baking temperature of 700 °C or higher, and the residual stress in the local area is reduced to 100 MPa or less, thereby achieving both low iron loss and low noise. The upper limit of the baking temperature is not particularly limited as long as it falls within the range of conventional methods, but it is generally preferred to be about 900 °C, at which glass coating does not fuse.

If an insulating coating is not applied, the residual stress in the local region cannot be reduced to 100 MPa or less at a baking temperature of 700 °C or higher. In this case, it is possible to reduce the residual stress in the local area to 100 MPa or less by performing annealing treatment at 500 °C for one minute or longer as an alternative.

It can also be combined with a method that inhibits the formation of forsterite film. Specific examples include methods of lowering the dew point during decarburization annealing, using a non-decarburizing atmosphere to suppresses the formation of SiO₂-based surface oxides, adding chlorides or the like as additives to an annealing separator, or changing the main component of an annealing separator to Al₂O₃ or CaO to prevent a forsterite film formation reaction.

A conventionally known manufacturing process of grain-oriented electrical steel sheet can be basically applied to manufacture the grain-oriented electrical steel sheet of the present disclosure.

A steel material adjusted to the above chemical composition may be formed into a slab by normal ingot casting or continuous casting, or a thin slab or thinner cast steel with a thickness of 100 mm or less may be manufactured by direct continuous casting. A slab is subjected to heating and then hot rolling in a conventional method, but the slab may be subjected to hot rolling directly after casting without heating. In the case of a thin slab or thinner cast steel, it may be subjected to hot rolling, or directly proceed to subsequent treatment without hot rolling.

A steel sheet thus obtained is preferably subjected to hot-rolled sheet annealing as necessary, and then cold rolling once, or twice or more with intermediate annealing performed therebetween to obtain a final sheet thickness. Then, after decarburization annealing, an annealing separator mainly composed of MgO is applied to the steel sheet, and then final annealing is performed to obtain a secondary recrystallized microstructure mainly having Goss orientation. An insulating coating is applied as necessary to obtain a product.

Irradiating the steel sheet surface with the laser beam or electron beam described above is an effective method to cause a crystal misorientation angle to obtain the magnetic domain refining effect. This treatment can be performed after or before the insulating coating baking. Even if a crystal misorientation angle is caused before secondary recrystallization, the misorientation angle is reduced during secondary recrystallization. Therefore, this treatment is preferably performed after secondary recrystallization. There is no problem to cause a crystal misorientation angle before secondary recrystallization, because a certain degree of magnetic domain refining effect can also be obtained in this case.

According to the present disclosure, low iron loss and good noise properties can be obtained without decreasing the magnetic flux density after stress relief annealing. The purpose of the stress relief annealing is to remove strain introduced by slitting, bending, and other treatment performed when manufacturing transformer iron cores. To achieve this, the annealing is generally performed in a temperature range of about 700 °C to 900 °C for about one to five hours.

The following describes suitable irradiation conditions for laser beam or electron beam to locally melt and resolidify the steel sheet surface to obtain the local area.

The so-called strain introduction type technique in which the magnetic domain width is narrowed by thermally distorting the steel sheet surface to form an area of extremely high dislocation density, and the groove introduction type technique in which grooves are formed directly on the steel substrate surface by high-energy laser beam irradiation or the like to generate magnetic poles on the groove sides and narrow the magnetic domain width are known as magnetic domain refining techniques using laser beam. The irradiation conditions of the present disclosure are intermediate between the above techniques.

Under such irradiation conditions, the resolidification microstructure obtained by irradiating the steel sheet with laser beam and locally melting the vicinity of the steel substrate surface has a different crystal orientation from the main Goss orientation of the secondary recrystallized grains. As a result, the resolidification microstructure produces a pseudo-grain boundary effect, which can narrow the magnetic domain width.

When the irradiation energy of the laser beam is too large, the steel substrate on the steel sheet surface is evaporated or sputtered to form grooves. Even if grooves are not formed, recessed parts may be formed. In this case, burrs or convex banks may be formed around the recessed parts to decrease the stacking factor, or an insulating coating applied thereon may be locally thinned to deteriorate insulation properties and corrosion resistance. Therefore, it is preferable to have as few grooves and roughness as possible.

To efficiently and locally melt the steel substrate without forming roughness in the laser beam irradiated area, it is effective to combine two or more laser beams. Specifically, if the laser beams are applied concentrically, by increasing the intensity of the laser beam at the center and weakening the intensity of the laser beams at the periphery, it is possible to suppress the spread of evaporation and sputtering of the steel substrate and efficiently melt only the central portion. In addition to changing the laser beam energy density, it is also effective to use laser beams with different wavelengths as a means of creating a difference in irradiation energy between the center and the periphery of the laser beams. Generally, it is difficult to limit the energy range of high-energy and low-energy laser beams, but it is possible to select a combination of laser beams having an energy range such that a melt zone is formed on the steel substrate surface and the amount of roughness on the steel substrate surface is 5 µm or less on average.

It is also possible to use a single laser beam called flat-top laser beam that has a uniform intensity distribution on the irradiated surface and a relatively large beam radius. Laser beams usually increase the energy density at the focal point by narrowing the beam, but by using a technique that converts the energy profile into a flat profile with optical methods such as using beam shapers, the irradiated area can be melted uniformly. The use of such a laser beam is also advantageous in suppressing surface roughness.

Regarding the wavelength of the laser beam, as the wavelength decreases, the energy increases, the reflection on the material surface decreases, and the absorption into the material improves. Specifically, the use of a laser beam with a wavelength of 0.9 µm or less decreases the reflectivity and increases the absorptivity, rendering it easier to form a localized melt zone while suppressing spatter. Laser beams with short wavelengths are even more effective in cases of suppressing formation of forsterite film, and applying the laser beam irradiation technique to steel sheets that have undergone mirror-finish treatment. On the other hand, the lower limit of the laser beam wavelength is preferably 0.15 µm due to equipment limitations.

A YAG laser is widely used because its laser beam can be easily and narrowly focused. The wavelength of the YAG laser is 1.03 µm to 1.07 µm, and the YAG laser can be used in the present disclosure. However, the use of a green laser whose wavelength is half a fundamental wavelength, that is, 0.53 µm, which is the second harmonic, or UV lasers whose wavelengths are 0.36 µm and 0.27 µm, which are the third harmonic and fourth harmonic, respectively, is more advantageous in maintaining the surface flatness because their absorption efficiency is better and spatter is less likely to occur. Similarly, it is also effective to use a blue laser with a wavelength of 0.44 µm to 0.49 µm using a blue semiconductor or the like, an excimer laser with a wavelength of 0.19 µm to 0.31 µm using halogen gas, or the like.

On the other hand, in the case of using a general laser beam with a wavelength of around 1 µm, it is extremely difficult to make the steel substrate (the interior of the steel sheet) absorb the energy to form a localized melt zone when the steel sheet surface is mirror-like and easily reflects light, because the laser beam is reflected.

It is difficult to specify suitable conditions for the laser beam output, because it is a combination of two or more laser beams with different intensities. However, a total heat value of 2 J/m or more and 50 J/m or less per unit length is generally preferred. The spot diameter of the laser beam is preferably 100 µm or less.

Next, suitable conditions for electron beam will be described. Like the case of laser beam, a magnetic domain refining technique using electron beam that introduces thermal strain to control magnetic domain structure has been known. However, to locally melt Goss-orientation crystal grains inside the steel substrate, it is preferable to irradiate the steel sheet with a higher energy density than before. The penetration depth of the electron beam into the steel substrate depends on the accelerating voltage of the electrons, which is preferably 60 kV or more in the present disclosure.

Suitable conditions of the amount of beam current vary depending on the speed at which the beam scans along the steel sheet surface. One means of suppressing the formation of burrs and grooves on the surface and reducing the amount of roughness is to combine a plurality of focusing coils that correspond to lenses of an optical system for focusing electron beam. This allows the beam profile, which is the energy distribution of the electron beam, to be adjusted to suppress evaporation and sputtering of the steel substrate and to reduce the amount of surface roughness.

Electron beam that has an extremely short wavelength is less likely to cause surface roughness and is more likely to form only melt zones than laser beam, perhaps because electrons can penetrate deeper into the steel substrate by increasing the accelerating voltage.

The electron beam does not require as much attention to forsterite film as the laser beam. Electrons are scattered more strongly by heavy elements than by light elements, causing interactions. Because a forsterite film is composed of light elements such as Mg, Si, and O (oxygen), the electron beam incident from the surface interacts little with the forsterite film. On the other hand, it strongly interacts and exchanges energy with Fe, a heavy element that makes up the steel substrate, so that it can efficiently melt the steel substrate.

For the manufacturing method of the grain-oriented electrical steel sheet, conditions other than those mentioned above may be in accordance with conventional methods.

The following describes the present disclosure in more detail with reference to Examples. However, the present disclosure is not limited to the following Examples.

### EXAMPLES

### (Example 1)

Grain-oriented electrical steel sheets having chemical compositions containing the steel components listed in Table 3, with the balance being Fe and inevitable impurities, where the final sheet thickness was 0.23 mm and secondary recrystallization had been completed by final annealing, were used as sample steel sheets. The sample steel sheets were continuously irradiated on one side using a ring-mode fiber laser with a wavelength of 1.07 µm and a green laser with a wavelength of 0.53 µm at various incident energies by changing the irradiation interval orthogonal to the rolling direction. Because the incident energy depended on the laser power and scanning rate, it was organized as energy per unit length. For the ring-mode fiber laser, the intensity balance between the inside and outside was adjusted to find conditions with the smallest amount of surface roughness, and the irradiation was performed under the conditions. Then, the steel sheets were subjected to insulating coating treatment including applying an insulation coating containing 50 % colloidal silica and aluminum phosphate and then baking at 850 °C.

The average values of the properties near the laser irradiation area of the steel sheets thus obtained were measured. The KAM map method by EBSD was used to extract areas (local areas) where the crystal misorientation angle differed from the surroundings by 1.5 degrees or more, and the volume fractions were calculated to obtain the crystal misorientation angle distribution. The residual stress was evaluated using the Wilkinson method by EBSD, and the amount of surface roughness was evaluated using a three-dimensional laser displacement meter. Conditions under which the laser irradiation energy was too large and grooves were formed were outside the scope of the present disclosure, and the crystal misorientation angle could not be measured and the volume fraction of the area could not be calculated. They are marked as -* in Table 3.

The AC iron loss W_{17/50} value and magnetic flux density Bs value were measured using a 500 mm square SST as magnetic properties. To evaluate noise properties, each steel sheet was obliquely sheared to a size of 100 mm in the width, 300 mm in the top base, and 500 mm in the bottom base, the sheared sheets were constructed into a 500 mm square single-phase model transformer with four sides composed of each of their bottom bases, and noise measurement was performed under alternating current excitation at 1.7 T and 50 Hz. The measurement results were subjected to A-scale frequency weighting as frequency weighting for auditory sensation and evaluated in terms of overall values.

These results are summarized in Table 3.

### [Table 3]

**Table 3**

| Sample No. | Steel composition of electrical steel sheet (mass%) | | | | Laser wavelength (µm) | Incident energy (J/m) | Crystal misorientation angle (Degree) | Volume fraction (%) | Residual stress (MPa) | Surface roughness (µm) | W_{17/50} (W/kg) | B₈ (T) | Noise properties (dBA) | Remarks |
|---|---|---|---|---|---|---|---|---|---|---|---|---|---|---|
| | Si | Mn | C | Others | | | | | | | | | | |
| 1 | 3.3 | 0.080 | 0.0020 | Sb=0.05 | 1.07 | 20 | * | * | 150 | 25 | 0.73 | 1.925 | 31.0 | Comparative Example |
| 2 | | | | P=0.04 | 1.07 | 15 | 4.0 | 1.7 | 90 | 10 | 0.75 | 1.935 | 29.0 | Comparative Example |
| 3 | | | | Cr=0.05 | 1.07 | 10 | 1.5 | 0.5 | 80 | 4 | 0.71 | 1.939 | 26.5 | Example |
| 4 | | | | Cu=0.08 | 1.07 | 7.5 | 1.5 | 0.08 | 65 | 3 | 0.79 | 1.939 | 27.0 | Comparative Example |
| 5 | | | | | 1.07 | 5 | 0 | 0 | 50 | 2 | 0.81 | 1.939 | 27.5 | Comparative Example |
| 6 | 3.4 | 0.070 | 0.0010 | | 0.53 | 15 | * | * | 120 | 12 | 0.74 | 1.937 | 29.0 | Comparative Example |
| 7 | | | | Sb=0.04 | 0.53 | 10 | 2.5 | 1.5 | 60 | 4 | 0.69 | 1.944 | 25.5 | Example |
| 8 | | | | Bi=0.01 | 0.53 | 10 | 2.5 | 4.0 | 60 | 4 | 0.80 | 1.942 | 28.5 | Comparative Example |
| 9 | | | | Cu=0.08 | 0.53 | 7.5 | 0.5 | 1.0 | 25 | 2 | 0.82 | 1.944 | 26.0 | Comparative Example |
| 10 | | | | Mo=0.01 | 0.53 | 5 | 0 | 0 | 15 | 2 | 0.85 | 1.945 | 25.5 | Comparative Example |
| 11 | 3.4 | 0.060 | 0.0020 | | 1.07 | 15 | 3.5 | 1.8 | 110 | 8 | 0.74 | 1.940 | 27.5 | Comparative Example |
| 12 | | | | Sn=0.05 | 1.07 | 12.5 | 2.0 | 1.5 | 80 | 4 | 0.70 | 1.943 | 26.5 | Example |
| 13 | | | | Cu=0.08 | 0.53 | 15 | * | * | 130 | 7 | 0.74 | 1.940 | 29.0 | Comparative Example |
| 14 | | | | Cr=0.07 | 0.53 | 12.5 | 2.5 | 3.0 | 70 | 3 | 0.77 | 1.939 | 28.5 | Comparative Example |
| 15 | | | | Nb=0.002 | 0.53 | 12.5 | 2.5 | 1.2 | 70 | 3 | 0.69 | 1.944 | 26.0 | Example |
| 16 | 3.4 | 0.070 | 0.0015 | | 1.07 | 10 | 1.5 | 1.0 | 60 | 3 | 0.71 | 1.942 | 26.0 | Example |
| 17 | | | | Sb=0.07 | 1.07 | 7.5 | 1.0 | 0.8 | 40 | 2 | 0.75 | 1.942 | 26.5 | Comparative Example |
| 18 | | | | P=0.05 | 1.07 | 7.5 | 1.0 | 2.5 | 40 | 2 | 0.79 | 1.941 | 27.5 | Comparative Example |
| 19 | | | | Ni=0.10 | 0.53 | 10 | 2.0 | 1.0 | 50 | 3 | 0.71 | 1.943 | 26.0 | Example |
| 20 | | | | Mo=0.01 | 0.53 | 7.5 | 1.0 | 0.3 | 30 | 2 | 0.76 | 1.943 | 26.0 | Comparative Example |

According to Table 3, it is understood that good iron loss and noise properties are obtained under conditions within the scope of the present disclosure.

Sample Nos. 1, 6, 11, and 13 were cases where the irradiation energy was too high. Because the residual stress was 100 MPa or more, the iron loss value was relatively low, but the noise properties were poor due to the influence of residual strain caused by residual stress. In Sample No. 2, the irradiation energy was also too high, the average amount of roughness was large, and the noise properties were poor.

On the other hand, in Sample Nos. 4, 5, 9, 10, 17, and 20, the irradiation energy was insufficient. Although the noise properties were excellent, the misorientation angle was small due to insufficient microstructure melting and the volume fraction of the obtained local area was insufficient, so that the magnetic domain refining effect was small and the iron loss reduction effect was insufficient. In Sample Nos. 8, 14, and 18, the irradiation interval was too narrow and the volume fraction of the local area was excessive, so that both iron loss properties and noise properties were poor.

### (Example 2)

Grain-oriented electrical steel sheets having chemical compositions containing the steel components listed in Table 4, with the balance being Fe and inevitable impurities, where the final sheet thickness was 0.23 mm and secondary recrystallization had been completed by final annealing, were used as sample steel sheets. Both sides of the sample steel sheets were subjected to insulating coating treatment including applying a chromium-free insulation coating containing 40 % colloidal silica and magnesium phosphate and then baking at 900 °C. Then, one side of each sample steel sheet was irradiated continuously or in dots with a pitch of 0.1 mm to 0.7 mm at 5 mm intervals orthogonal to the rolling direction using electron guns with accelerating voltage of 60 kV and 150 kV.

The irradiation interval was set to 2 mm for Sample Nos. 3, 12, and 19 in this Example.

The samples were then sheared to sample size for various evaluations and subjected to stress relief annealing for three hours at 800 °C in a nitrogen atmosphere. For the obtained samples, the properties near the electron beam irradiation area were evaluated and the magnetic properties and noise properties were evaluated by a single-phase model transformer in the same manner as in Example 1, and the results were summarized in Table 4. Conditions under which the electron beam irradiation energy was too large and grooves were formed were outside the scope of the present disclosure, and the crystal misorientation angle could not be measured and the volume fraction of the area could not be calculated. They are marked as -* in Table 4.

### [Table 4]

**Table 4**

| Sample No. | Steel composition of electrical steel sheet (mass%) | | | | Interval between dots (µm) | Beam output (mA × kV) | Crystal misorientation angle (Degree) | Volume fraction (%) | Residual stress (MPa) | Surface roughness (µm) | W_{17/50} (W/kg) | B₈ (T) | Noise properties (dBA) | Remarks |
|---|---|---|---|---|---|---|---|---|---|---|---|---|---|---|
| | Si | Mn | C | Others | | | | | | | | | | |
| 1 | 3.3 | 0.080 | 0.0020 | | Continuous | 10 × 150 | 0 | 0 | 30 | 1 | 0.80 | 1.940 | 26.0 | Comparative Example |
| 2 | | | | Sb=0.05 | Continuous | 20 × 150 | 3.0 | 1.5 | 50 | 3 | 0.70 | 1.939 | 26.0 | Example |
| 3 | | | | P=0.04 | Continuous | 20 × 150 | 4.0 | 3.5 | 80 | 8 | 0.77 | 1.936 | 27.5 | Comparative Example |
| 4 | | | | Cr=0.05 | Continuous | 50 × 60 | 2.0 | 1.5 | 40 | 2 | 0.71 | 1.939 | 26.5 | Example |
| 5 | | | | Cu=0.08 | Continuous | 100 × 60 | -* | -* | 110 | 12 | 0.74 | 1.927 | 28.0 | Comparative Example |
| 6 | 3.4 | 0.070 | 0.0010 | | 0.3 | 15 × 150 | 0.5 | 0.2 | 40 | 2 | 0.81 | 1.944 | 26.5 | Comparative Example |
| 7 | | | | Sb=0.04 | 0.3 | 25 × 150 | 2.5 | 1.0 | 70 | 4 | 0.68 | 1.944 | 25.0 | Example |
| 8 | | | | Bi=0.01 | 0.3 | 60 × 60 | 2.0 | 0.7 | 50 | 2 | 0.70 | 1.944 | 26.0 | Example |
| 9 | | | | Cu=0.08 | 0.3 | 90 × 60 | 4.0 | 3.0 | 90 | 8 | 0.82 | 1.937 | 27.5 | Comparative Example |
| 10 | | | | Mo=0.01 | 0.3 | 120 × 60 | -* | -* | 120 | 15 | 0.85 | 1.932 | 28.5 | Comparative Example |
| 11 | 3.4 | 0.060 | 0.0020 | | 0.1 | 30 × 150 | 3.5 | 2.5 | 110 | 7 | 0.77 | 1.937 | 29.5 | Comparative Example |
| 12 | | | | Sn=0.05 | 0.3 | 30 × 150 | 2.5 | 3.5 | 80 | 4 | 0.76 | 1.935 | 28.0 | Comparative Example |
| 13 | | | | Cu=0.08 | 0.3 | 30 × 150 | 2.5 | 1.5 | 80 | 4 | 0.70 | 1.942 | 27.0 | Example |
| 14 | | | | Cr=0.07 | 0.5 | 30 × 150 | 2.0 | 1.0 | 60 | 3 | 0.72 | 1.944 | 26.5 | Example |
| 15 | | | | Nb=0.002 | 0.7 | 30 × 150 | 0.5 | 0.3 | 40 | 2 | 0.79 | 1.944 | 26.0 | Comparative Example |
| 16 | 3.4 | 0.070 | 0.0015 | | 0.1 | 100 × 60 | -* | -* | 130 | 14 | 0.80 | 1.936 | 29.0 | Comparative Example |
| 17 | | | | Sb=0.07 | 0.3 | 100 × 60 | 4.0 | 1.8 | 110 | 9 | 0.77 | 1.939 | 28.0 | Comparative Example |
| 18 | | | | P=0.05 | 0.5 | 100 × 60 | 2.5 | 1.5 | 80 | 6 | 0.75 | 1.941 | 27.0 | Comparative Example |
| 19 | | | | Ni=0.10 | 0.5 | 100 × 60 | 2.5 | 3.5 | 80 | 6 | 0.77 | 1.937 | 28.5 | Comparative Example |
| 20 | | | | Mo=0.01 | 0.7 | 100 × 60 | 1.5 | 1.0 | 60 | 3 | 0.72 | 1.943 | 25.5 | Example |

According to Table 4, it is understood that good iron loss and noise properties are obtained under conditions where crystal misorientation angle, residual stress, and amount of surface roughness satisfy the requirements of the present disclosure, regardless of whether the electron beam irradiation is continuous or in dots.

Sample Nos. 2, 4, 7, 8, 13, 14, and 20, which are Examples, all had an amount of surface roughness of less than 5 µm, and they had excellent iron loss reduction effect even after strain relief annealing without forming the so-called groove.

According to the above examples, it can be confirmed that the present disclosure is a completely novel method that utilizes a crystal-rotated microstructure formed during melting and resolidification to obtain an advantageous iron loss reduction effect even after strain relief annealing, which is very different from conventionally known techniques that maintain the magnetic domain refining effect after strain relief annealing by forming physical grooves.

## Claims

1. A grain-oriented electrical steel sheet, comprising
a chemical composition containing, in mass%, Si: 2.0 % to 8.0 %, Mn: 0.005 % to 1.000 %, and C: 0.0050 % or less, with the balance being Fe and inevitable impurities, and
a local area having a misorientation angle of 1.5 degrees or more from surrounding crystals and extending linearly in a direction crossing a rolling direction on at least one of front and back surfaces of the steel sheet, wherein
the local area has a volume fraction of 0.1 % or more and 2.0 % or less and a residual stress of 100 MPa or less, and
the surface having the local area has an average amount of roughness on a steel substrate being less than 5 µm.

2. The grain-oriented electrical steel sheet according to claim 1, wherein the chemical composition further contains, in mass%, at least one selected from the group consisting of Ni: 0.01 % to 1.50 %, Cr: 0.01 % to 0.50 %, Cu: 0.01 % to 0.50 %, Bi: 0.01 % to 0.50 %, Sb: 0.01 % to 0.20 %, Sn: 0.01 % to 0.20 %, Mo: 0.01 % to 0.20 %, P: 0.01 % to 0.20 %, and Nb: 0.001 % to 0.015 %.
